# EUROPEAN PATENT APPLICATION

(11) **EP 3 045 808 A1**
(43) Date of publication of application: **20.07.2016**
(21) Application number: 14844237.9
(22) Date of filing: 05.09.2014
(51) Int. Cl.: F21V 99/00, G08G 1/14

(54) **LED LIGHTING DEVICE FOR OUTDOOR PARKING LOT**

(30) Priority: 10.09.2013 KR 20130108510
(71) Applicant: KMW Inc., Gyeonggi-do 445-813 (KR)
(72) Inventor: KIM, Duk-Yong, Hwaseong-si Gyeonggi-do 445-813 (KR)
(74) Representative: RatnerPrestia
(86) International application number: PCT/KR2014/008421
(87) International publication number: WO 2015/037895

(57) **Abstract**

The present invention relates to an LED lighting device for an outdoor parking lot, and the LED lighting device installed in each parking area of the outdoor parking lot comprises: a main lighting unit for lighting a corresponding parking area; an auxiliary lighting unit provided separately from the main lighting unit to display different colors according to ranges of available parking spaces of the corresponding parking area; and a camera for detecting the number of available parking spaces by photographing the corresponding parking area. According to the present invention, the number of available parking spaces is checked by photographing a parking area around an installed LED lighting device to check whether there are available parking spaces, and the auxiliary lighting unit for displaying a different color according to the number of parking spaces is provided besides the main lighting unit to display whether parking is available in the parking area where the LED lighting device is installed and to simultaneously display the number of vehicles which can be parked with a different color for each range, so that users can easily check an available parking area.

## Description

### [Technical Field]

The present disclosure relates to a light-emitting diode (LED) lighting device for an outdoor parking lot, and more particularly, to an LED lighting device for an outdoor parking lot, which is installed in each parking area of the outdoor parking lot, such as an outdoor concert hall, a baseball ground, a soccer field, a theme park, an amusement park, and so forth, to indicate whether parking is available in the parking area.

### [Background Art]

Generally, with increasing interest in leisure and sports and increasing free time, more and more people visit sports fields such as a baseball ground, a soccer field, and athletics sports complex, a sports field, an amusement park, and an outdoor concert hall.

The above-mentioned facilities have outdoor parking lot facilities corresponding to the number of persons to be accommodated. However, the outdoor parking lot facility has a problem in which persons arriving later than an opening hour may have a difficulty in finding an available parking space because of parked vehicles, and in particular, it is difficult to find an available parking space with the naked eyes at night.

Korean Patent Registration No. 10-1243881 (registered on March 8, 2013, and entitled a parking guide system) discloses a technique for guiding a vehicle having entered a parking lot to an available parking space. Although this technique is applicable to a limited area such as an indoor environment, the technique is not applicable to a large-area outdoor parking lot because of difficulties in installation and maintenance of a sensor, and moreover, it is impossible to guide each vehicle by matching a number of the vehicle to a parking space.

Accordingly, in the current market, there is a need for a means for indicating whether parking is possible in a particular area of an outdoor parking lot.

### [Detailed Description of the Invention]

### [Technical Problem]

An embodiment of the present disclosure provides an LED device for an outdoor parking lot, which indicates possibility of parking for each area in an outdoor parking lot to reduce a time spent in finding a parking space.

Moreover, an embodiment of the present disclosure provides an LED lighting device for an outdoor parking lot, which monitors an outdoor parking lot at all times to prevent an accident or secure proofs or evidence of an accident.

Furthermore, an embodiment of the present disclosure provides an LED lighting device for an outdoor parking lot, which minimizes power consumption.

### [Technical Solution]

In accordance with an aspect of the present disclosure, there is provided an LED lighting device installed in each parking area of an outdoor parking lot, the LED lighting device including a main lighting unit configured to light a parking area, an auxiliary lighting unit provided separately from the main lighting unit to show a different color depending on a range of a number of available parking spaces of the parking area, and a camera configured to detect the number of available parking spaces by photographing the parking area.

### [Effects of the Invention]

An LED lighting device for an outdoor parking lot according to the present disclosure includes not only a main lighting unit for lighting, but also an auxiliary lighting unit configured to photograph a parking area around the installed LED lighting device, to check whether there are available parking spaces, to determine the number of parking spaces, and to show a different color depending on the number of parking spaces, thereby indicating whether parking is possible in a parking area where the LED lighting device is installed and indicating the number of vehicles that may be parked with a different color depending on a range to allow users to easily identify an available parking area.

Moreover, according to the present disclosure, the number of available parking spaces is determined using a camera installed in the lighting device, and the outdoor parking lot is monitored using the camera, thereby preventing crimes or accidents and securing proofs or evidence.

Furthermore, according to the present disclosure, the LED lighting device includes a charging battery therein, so as to be power-charged in early morning hours corresponding to low electric charges, thereby reducing costs and helping stabilization of power supply.

### [Brief Description of Drawings]

FIG. 1 is a block diagram of an LED lighting device for an outdoor parking lot according to an embodiment of the present disclosure;
FIG. 2 is a plane view of a parking lot to which the present disclosure is applied;
FIGs. 3 through 5 are block diagrams of an LED lighting device for an outdoor parking lot according to different embodiments of the present disclosure.

### [Best Mode for Carrying out the Invention]

Hereinafter, a light-emitting diode (LED) lighting device for an outdoor parking lot according to the present disclosure will be described in detail.

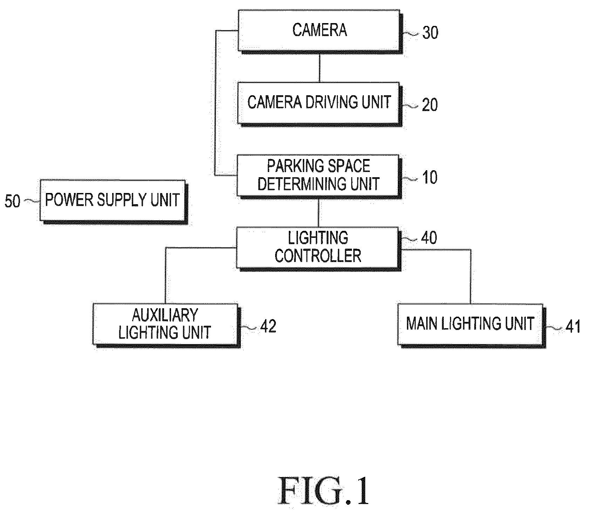

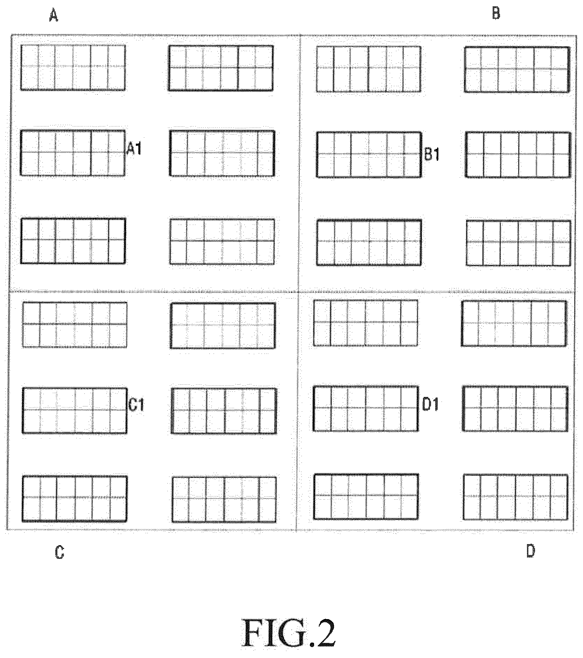

FIG. 1 is a block diagram of an LED lighting device for an outdoor parking lot according to an embodiment of the present disclosure, and FIG. 2 is a plane view of a parking lot to which the present disclosure is applied.

Referring to FIGs. 1 and 2, an LED lighting device for an outdoor parking lot according to an embodiment of the present disclosure may include a camera 30 for photographing peripheral parking areas A through D, a parking space determining unit 10 for determining the number of parking spaces by comparing an image captured by the camera 30 with a reference image, a lighting controller 40 for indicating an auxiliary lighting unit 42 with a different color based on a determination result of the parking space determining unit 10 and controlling lighting-on and lighting-off of a main lighting unit 41, a camera driving unit 20 for rotating the camera 30, and a power supply unit 50 for supplying power to each element of the LED lighting device.

A description will now be made of a structure and operations of the LED lighting device as described above for the outdoor parking lot according to an embodiment of the present disclosure.

First, as shown in FIG. 2, LED lighting devices A1 through D1 according to the present disclosure are installed in parking areas A through D, respectively. Each of the LED lighting devices A1 through D1 may be installed in the center of each of the parking areas A through D and may be installed at a high position to light each of the parking areas A through D with the main lighting unit 41.

When installed as described above, the camera 30 installed at a higher position than the main lighting unit 41 of each of the LED lighting devices A1 through D1 photographs each of the parking areas A through D while rotating by the camera driving unit 20, and an image of one frame periodically extracted from information about an image captured by photographing each of the parking areas A through D is provided to the parking space determining unit 10.

The parking space determining unit 10 compares the image with reference images to determine an approximate number of available parking spaces. For example, the determination may be made based on a preset reference value, such as unavailable parking, 10 available parking spaces or less, 20 available parking spaces or less, parking spaces exceeding 20 available parking spaces, or the like, and a different signal is output depending on a determination result.

The determination result of the parking space determining unit 10 is input to the lighting controller 40, and the lighting controller 40 drives the auxiliary lighting unit 42 in a preset color depending on the determination result of the parking space determining unit 10.

For example, red light is emitted for unavailable parking, orange light is emitted for 10 available parking spaces or less, yellow light is emitted for 20 available parking spaces or less, and green light is emitted for available parking spaces exceeding 20 parking spaces.

Thus, users using the outdoor parking lot may quickly move to the available parking areas A through D by checking a color of the auxiliary lighting unit 42 and park their vehicles in the corresponding parking areas.

For example, if the auxiliary lighting units 42 of the LED lighting devices A1, B1, and C1 installed in the parking areas A, B, and C show red light and the auxiliary lighting unit 42 of the LED lighting device D1 installed in the parking area D shows yellow light, then users may move to the parking area D having about 20 parking spaces and park their vehicles.

Although the camera driving unit 20 is installed to rotate the camera 30 in the above example, the camera driving unit 20 may not be used if a plurality of cameras 30 are installed for photographing in 360° directions, and the camera driving unit 20 may not be used either if the LED lighting devices A1 through D1 are installed separately at the edges of the parking areas A through D rather than in the centers of the parking areas A through D.

The main lighting unit 41 is lighted on or lighted off under control of the lighting controller 40, and is lighted off during the day and, at night, is lighted on only when necessary.

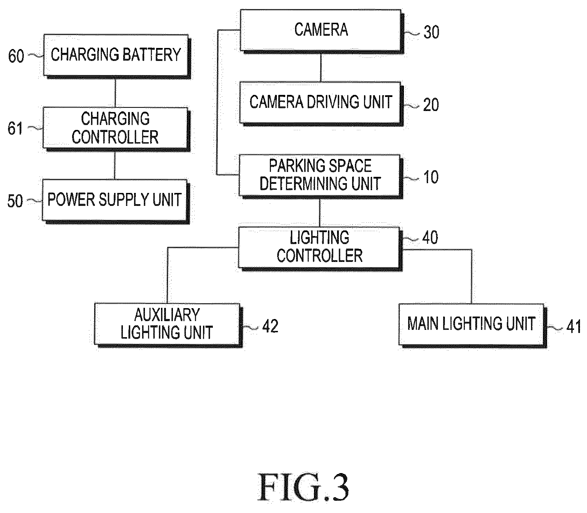

The auxiliary lighting unit 42 may be lighted on during the day depending on a purpose. For example, for convenience in parking, the number of available parking spaces of the parking areas A through D may be indicated during the day. FIG. 3 is a block diagram of an LED lighting device for an outdoor parking lot according to another embodiment of the present disclosure.

Referring to FIG. 3, the LED lighting device may further include a charging battery 60 and a charging controller 61 in addition to the elements shown in FIG. 1.

The charging battery 60 consumes low power, is charged with electricity in early morning hours corresponding to low electric charges, and uses the charged power to drive the camera 30 during the day or to light on the auxiliary lighting unit 42 in a different color depending on the number of available parking spaces.

In this way, the efficiency of power consumption of multiple LED lighting devices according to the present disclosure installed in an outdoor parking lot may be improved while cutting costs.

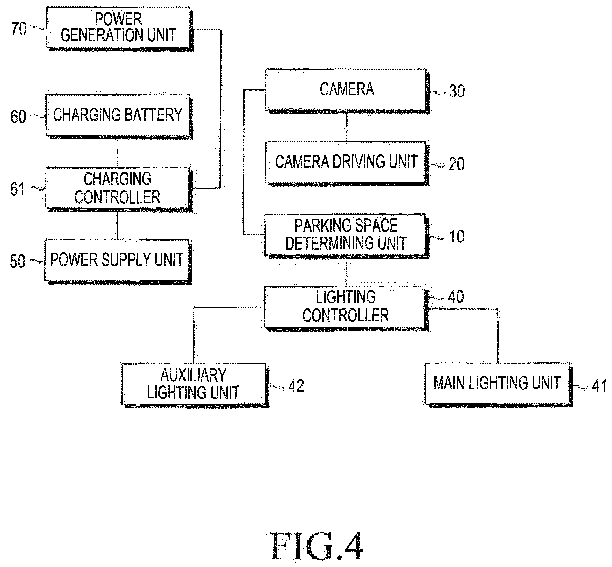

FIG. 4 is a block diagram of an LED lighting device for an outdoor parking lot according to another embodiment of the present disclosure.

Referring to FIG. 4, an LED lighting device for an outdoor parking lot according to another embodiment of the present disclosure may further include a power generation unit 70 that generates electricity to charge the charging battery 60, in addition to the elements of FIG. 3.

The power generation unit 70 is capable of small power generation, considering that the LED lighting device according to the present disclosure is installed in an outdoor parking lot, especially, in a place where there is no nearby tall building. As an example of the power generation unit 70, a solar cell for photovoltaic power generation or a small wind power generator may be used.

As such, by further including the power generation unit 70, the LED lighting device for the outdoor parking lot may further reduce power consumption.

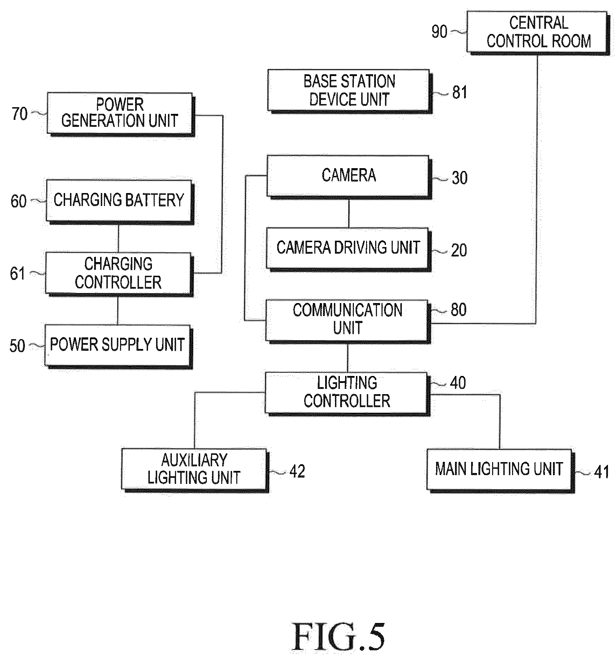

FIG. 5 is a block diagram of an LED lighting device for an outdoor parking lot according to another embodiment of the present disclosure.

Referring to FIG. 5, instead of using the parking space determining unit 10 that determines the number of available parking spaces from an image captured by the camera 30, an LED lighting device for an outdoor parking lot according to another embodiment of the present disclosure transmits an image captured by the camera 30 to a central control room 90 through a communication unit 80, checks the image in the central control room 90 to determine the number of available parking spaces in a corresponding paring area, and transmits the determination result to the communication unit 80, thus allowing the lighting controller 40 to determine a color of the auxiliary lighting unit 42 and to control the auxiliary lighting unit 42 to be lighted on in the determined color.

The determination of the number of available parking spaces in the central control room 90 may be performed automatically by comparison with reference images as in the parking space determining unit 10, and may be manually controlled by determination of an operator with the naked eyes.

The communication unit 80 may be wired or wireless communication and may use various communication schemes. In particular, a wireless communication scheme such as ZigBee, WiFi, or the like may be provided, and in the case of WiFi, the communication unit 80 may operate as an access point.

The present disclosure may further include a base station device unit 81 for supporting communication of a mobile communication terminal. As base station devices have been subminiaturized, the base station devices may be installed in a lighting device, and by including the base station device unit 81, cost corresponding to installation of a separate base station may be reduced.

It would be obvious to those of ordinary skill in the art that the present disclosure may be variously modified and changed without departing from the technical subject matter of the present disclosure.

**[Description of Symbols]**

| | | | |
|---|---|---|---|
| 10: | Parking Space Determining Unit | 20: | Camera Driving Unit |
| 30: | Camera | 40: | Lighting Controller |
| 41: | Main Lighting Unit | 42: | Auxiliary Lighting Unit |
| 50: | Power Supply Unit | 60: | Charging Battery |
| 61: | Charging Controller | 70: | Power Generation Unit |
| 80: | Communication Unit | 81: | Base Station Device Unit |
| 90: | Central Control Room | | |

## Claims

1. A light-emitting diode (LED) lighting device installed in each parking area of an outdoor parking lot, the LED lighting device comprising:
a main lighting unit configured to light a parking area;
an auxiliary lighting unit provided separately from the main lighting unit to show a different color depending on a range of a number of available parking spaces of the parking area; and
a camera configured to detect the number of available parking spaces by photographing the parking area.

2. The LED lighting device of claim 1, further comprising:
a parking space determining unit configured to periodically receive an image captured by the camera, to compare the image with a reference image to determine the number of available parking spaces, and to cause a lighting controller for controlling the auxiliary lighting unit to recognize the number of available parking spaces.

3. The LED lighting device of claim 1, further comprising:
a communication unit configured to transmit an image captured by the camera to a central control room and to deliver information about a number of available parking spaces of the parking area determined by the central control room to the lighting controller for controlling the auxiliary lighting unit.

4. The LED lighting device of claim 2 or 3, further comprising:
a camera driving unit configured to rotate the camera to photograph the entire parking area.

5. The LED lighting device of claim 2 or 3, further comprising:
a charging battery and a charging controller configured to perform charging in hours corresponding to low electricity charges.

6. The LED lighting device of claim 5, further comprising:
a power generation unit configured to generate power to charge the charging battery.

7. The LED lighting device of claim 6, wherein the power generation unit is a photovoltaic power generation device or a wind power generation device.

8. The LED lighting device of claim 6, further comprising:
a base station device unit for supporting communication of a mobile communication terminal.
